(19) Europäisches Patentamt / European Patent Office / Office européen des brevets

(11) **EP 2 482 199 A1**

(12) **EUROPEAN PATENT APPLICATION**
published in accordance with Art. 153(4) EPC

(43) Date of publication:
01.08.2012 Bulletin 2012/31

(51) Int Cl.:
*G06F 17/30* (2006.01)     *H04M 1/725* (2006.01)

(21) Application number: 10788971.9

(22) Date of filing: 23.06.2010

(86) International application number:
PCT/CN2010/074326

(87) International publication number:
WO 2010/145575 (23.12.2010 Gazette 2010/51)

(84) Designated Contracting States:
AL AT BE BG CH CY CZ DE DK EE ES FI FR GB GR HR HU IE IS IT LI LT LU LV MC MK MT NL NO PL PT RO SE SI SK SM TR

(30) Priority: 21.09.2009  CN 200910175675

(71) Applicant: ZTE Corporation
Shenzhen, Guangdong 518057 (CN)

(72) Inventors:
• BAI, Luo
Guangdong 518057 (CN)
• JI, Zhongwei
Guangdong 518057 (CN)
• LI, Bin
Guangdong 518057 (CN)
• WENG, Rufu
Guangdong 518057 (CN)

(74) Representative: Pons Ariño, Maria Purificación
Gl. Rubén Darío 4
28010 Madrid (ES)

(54) **METHOD AND DEVICE FOR UPDATING INDEX IN TERMINAL AND SEQUENCING SEARCH RESULTS BASED ON UPDATED INDEX**

(57) The present invention provides a method and an apparatus for updating an index and sequencing search results based on the updated index in a terminal. The method comprises: retrieving whether there is any modification in a file; if there is any modification in the file, performing an increment index the modified file to generate new index file, wherein the increment index includes a number of times that the modified file is selected historically; merging the new index file into the original index file; obtaining key words input by the user; querying the search results related to the key words, sequencing the search results according to the relevance between the search results and the key words and the number of times that the modified file is selected historically and displaying the sequenced search results to the user. By the present invention, the terminal local index table can be automatically updated in real time, fewer mobile phone resources and power sources are occupied, the research results are more humanized, and the user experience of the mobile terminal is improved.

Retrieve in the full-text index to obtain results according to the search information inputted by the user — S501

Calculate weight W for the retrieved results according to the frequency of the search item in a document — S502

Calculate weight H for the number of times that the user selects the file historically — S503

Calculate weight W and weight H to obtain the total weight S — S504

Sequence the results in a descending order according to the total weight S, and feed back to the user — S505

According to the user selection, increase the value in the field that the selected file is selected historically — S506

**Fig.5**

EP 2 482 199 A1

## Description

### Field of the Invention

The present invention relates to the information retrieval field based on a mobile terminal, and in particular to a method and an apparatus for updating an index and sequencing search results based on the updated index in a terminal.

### Background of the Invention

With the continuous development of the communication industry, both the frequency and the scope of using various mobile terminals are increased dramatically. Furthermore, with the drop in price of hardware equipment, various mobile terminals with strong functions gradually step into ordinary families, which become not only one of major tools for daily communication, but also essential items for leisure and entertainment or working.

Both the processing capability and the capacity of mobile terminals are increasing, and at the same time they also support external equipment with larger capacity, such as memory cards and the like. Users increasingly tend to save various text files and multimedia data in mobile terminals. In addition, most modern mobile terminals enable users to save contents such as short messages, multimedia messages, contacts, emails and the like in a memory space aside from the SIM space, in this way, users may save mass information in the mobile terminals without deleting in order to make the information available permanently.

Since such increase in the data memory capacity of mobile terminals not only provides better user experience for users, but also makes it relatively complex and difficult to search relevant information. Therefore, desktop search in mobile terminals will greatly improve the speed with which users search the local information.

Although the processing capability of smart mobile terminals is increasing, due to their inherent characteristics, it is very difficult to directly apply the existing network search engine technology and the desktop search technology used by personal computers to embedded mobile terminals. As the battery capacity of mobile terminals is limited, a certain background program with special high energy consumption cannot be run for a long time, and it consumes a lot of power sources and system resources to complete one new full-text index at each time of local retrieval.

Usually, relevance is an important basis for sequencing by the search engine. Generally, the search results are sequenced in a descending order according to the relevance. This way is very common in Web. However, in an embedded system, as the resources used by the user are limited, most of information to be queried is also the resources to be used repeatedly by the user, for example, information about the sender of a certain short message, contents of a certain email, and a certain song played frequently, or the like.

Therefore, it is an urgent problem to be solved to provide a local index creating and maintaining method for simplifying the local search process. In addition, on the basis of the traditional way of sequencing the search results according to the relevance, the sequencing of the search results is further improved according to the access frequency of the mobile terminal user, which improves the retrieval effect and makes the search process more suit the user habit, and enhances the user experience.

### Summary of the Invention

The present invention is proposed considering the problem in the related art that search in a terminal occupies a lot of resources and is low in efficiency; therefore the main purpose of the present invention is to provide a method and an apparatus for updating an index and sequencing search results based on the updated index in a terminal, to solve the above problem.

The present invention provides a method for updating an index and sequencing search results based on the updated index in a terminal, comprising: retrieving whether there is any modification in a file in the terminal; if there is any modification in the file, performing an increment index for the modified file to generate a new index file, wherein the increment index includes a number of times that the modified file is selected historically; merging the new index file into the original index file; obtaining key words input by the user; querying the search results related to the key words, sequencing the search results according to the relevance between the search results and the key words and the number of times that the modified file is selected historically, and displaying the sequenced search results to the user.

Preferably, after sequencing the search results according to the relevance between the search results and the key words and the number of times that the modified file is selected historically, and displaying the sequenced search results to the user, the method further comprises:

recording a number of times that the user selects the modified file, and updating the number of times that the modified file is selected historically.

Preferably, the step of retrieving whether there is any modification in a file in the terminal comprises: comparing a time stamp of an existing file with a time stamp of the file reserved when the index is created at the last time; if the time stamp of the existing file is identical to the time stamp of the file reserved when the index is created at the last time, determining that there is no modification in the file; if the time stamp of the existing file is not identical to the time stamp of the files reserved when the index is created at the last time, determining that there is modification in the file.

Preferably, the step of retrieving whether there is any modification in a file in the terminal comprises: retrieving whether there is any modification in the file in the terminal with a predetermined retrieval cycle.

Preferably, the new index file is regularly merged into the original index file when retrieving that the terminal is idle or when the new index file reaches a predetermined quantity.

Preferably, the cycle for merging is identical to the cycle which is set by the user to retrieve whether there is any modification in a file in the terminal.

Preferably, after the new index file is generated, the new index file temporarily saves in a memory of the terminal, and the temporarily saved new index file is released after the new index file is merged into the original index file.

The present invention also provides an apparatus for updating an index and sequencing search results based on the updated index in a terminal, comprising: a retrieval unit, configured to retrieve whether there is any modification in a file in the terminal; a generation unit, configured to perform an increment index for the modified file to generate a new index file if there is any modification in the file, wherein the increment index includes a number of times that the modified file is selected historically; a merge unit, configured to merge the new index file into the original index file; an obtaining unit, configured to obtain key words input by the user; an query unit, configured to query the search results related to the key words, sequence the search results according to the relevance between the search results and the key words and the number of times that the modified file is selected historically; a displaying unit, configured to display the sequenced search results to the user.

Preferably, the apparatus further comprises: a recording unit, configured to record a number of times that the user selects the modified file; an updating unit, configured to update the number of times that the modified file is selected historically.

Preferably, the apparatus further comprises: a comparison unit, configured to compare a time stamp of an existing file with a time stamp of the file reserved when the index is created at the last time;

a first determining unit, configured to determine that there is no modification in the file if the time stamp of the existing file is identical to the time stamp of the file reserved when the index is created at the last time; a second determining unit, configured to determine that there is modification in the file if the time stamp of the existing file is not identical to the time stamp of the file reserved when the index is created at the last time.

By the present invention, the mobile phone local index table can be automatically updated in real time, in order to meet the local search demands, and fewer mobile phone resources and power sources are occupied. Furthermore, the research results are more humanized, and the user experience of the mobile terminal is improved.

## Brief Description of the Drawings

The drawings illustrated here provide a further understanding of the present invention and form a part of the present application. The exemplary embodiments and the description thereof are used to explain the present invention without unduly limiting the scope of the present invention. In the drawings:

Fig. 1 is a flowchart of creating a local full-text index in a preferred embodiment of the present invention;
Fig. 2 is a schematic diagram of an index file directory structure in a preferred embodiment of the present invention;
Fig. 3 is a schematic diagram of the increment index in a preferred embodiment of the present invention;
Fig. 4 is a schematic diagram of an index file structure in a preferred embodiment of the present invention;
Fig. 5 is a flowchart of sequencing search results in a preferred embodiment of the present invention; and
Fig. 6 is a structure block diagram of an apparatus according to the present invention.

## Detailed Description of the Embodiments

The main purpose of the present invention is to provide a local search method of a mobile terminal, comprising a method for updating an index and a method for sequencing search results.

The following technical solution is adopted in the present invention to solve the technical problem of the present invention.

A method for updating an index in a mobile terminal mainly comprises the following steps.

Step 1: retrieval is performed regularly to check whether there is any modification in a file, by comparing the time stamp of the existing file with the time stamp in the file meta-information reserved when the index is created at the first time, if the time stamp of the existing file is newer than the time stamp in the file meta-information reserved when the index is created at the first time, Step 2 is executed, otherwise the step ends.

Step 2: an increment index is performed for a new file to generate a new index file.

Step 3: the index file containing increment information is merged into the original large index file.

A method for sequencing search results in a mobile terminal mainly comprises the following steps:

(1) The search engine in the mobile terminal analyzes texts, short messages, contacts, emails, pictures, videos, audios and other files containing text information on the storage medium of the mobile terminal, and creates a full-text index for them.
(2) Local search in the mobile terminal: the user interface of the search engine accepts an query request from the user, reads the full-text index corresponding to the query request, and feeds back the search results closest to the user's search requirements to the user; simultaneously, records the number of times that the user selects a certain search result in the index table.

(3) multiple searches in the mobile terminal: the user interface of the search engine accepts a query request from the user, and reads the full-text index corresponding to the query request, then determines the relevance between search results and search contents, and sequences the number of times that the search results are selected historically. The results are sequenced in a descending order by using the relevance of the search results as the first priority and the number of times that the search results are selected historically as the second priority, and feeds the sequenced results back to the user. Namely, only when a file with relevance is searched, weight calculation based on the search results and the number of times that the search results are selected historically is performed for the file with relevance, and the search results are sequenced according to the weight calculation results.

By the present invention, the mobile phone local index table can be automatically updated in real time, in order to meet the local search demands, and fewer mobile phone resources and power sources are occupied. Furthermore, the research results are more humanized. The user experience of the mobile terminal is improved.

A detailed description is given to the preferred embodiments of the present invention with reference to the accompanying drawings. The preferred embodiment of the present invention is described for the purpose of illustration, not for limiting the present invention.

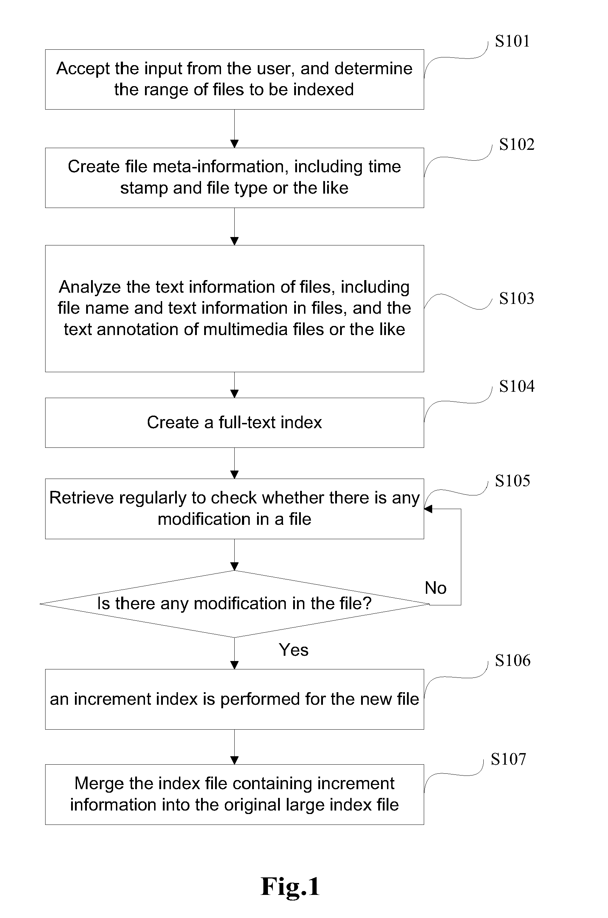

Fig. 1 is a flowchart of creating a local full-text index in a preferred embodiment of the present invention, as shown in Fig. 1, the method comprises the following steps.

Step S101, according to the input of the user, a range of information to be indexed is determined. In this way, the unnecessary indexing time can be reduced, the times of effective search can be increased, and the private information of the user in the mobile terminal can be prevented from being searched in some situations.

Step S102, according to the range of information determined in Step S101, file meta-information is created, including the time stamp of file creation or file modification and the file type or the like.

Step S103, according to the range of information determined in Step S101, the text information of files, including the text information in file name and files, and the text annotation of multimedia files or the like, are analyzed. These information and data are saved in a plain text or an XML document structure, which can be quite flexibly embedded into the program of the mobile equipment.

Step S104, a full-text index is created, the indexing process is that file name is read, the file is saved in path and content two fields, and the contents are full-text indexed. The contents include multiple fields, and different indexing rules and saving rules are selected for the fields according to the renewal outputted by different field attributes and data, for example, titles need to be performed word segmentation operation, but dates only need to be saved without performing word segmentation operation.

In the present invention, what is updated is not the whole index file, instead, when information in the index needs to be added, new index files are created continuously, and then these new small index files are merged into the original large index file regularly when the mobile phone is idle, that is called an increment index, in this way, the efficiency of index is improved without influencing the efficiency of search and query. One of advantages of creating new index files is that the user may also obtain the recent search results by querying the newly created index files if the original index file is corrupted accidentally. In addition, indexing from the initial data again only needs to index the initial data before the latest time of creating a new index file, the indexing time is saved. In addition, the merge cycle of merging small index files into the original large index file is identical to the indexing cycle set by the user, because it is necessary to merge the added index file into the original large index file only when the index file changes. It is necessary to ensure that the merge process is not performed during the indexing process, because this will take a large amount of CPU time, further to make the efficiency of indexing low and to influence the user experience of operating the mobile phone. Therefore, merge operation needs to be performed after the indexing process ends and when the user does not operate the mobile phone for a long period of time, wherein the merge time point set herein is half an hour after the user stops operating the mobile phone. Herein, a built-in increment index mechanism in Lucene is utilized, by the use of segments, the new index information is quickly merged into the original large index file in the memory, then the updated large index file is written into a disc, and finally the needless small index files are deleted.

Specifically, the updating and maintaining method in the present invention comprises the following steps.

Step S105, retrieval is performed regularly to check whether there is any modification in a file, by comparing the time stamp of the existing file with the time stamp in the file meta-information reserved when the index is created at the first time, if the time stamp of the existing file is newer than the time stamp in the file meta-information reserved when the index is created at the first time, Step S106 is executed, otherwise Step S105 is continuously executed according to the retrieval cycle.

Step S106, an increment index is performed for a new file to generate a new index file.

Step S107, the index file containing increment information is merged into the original large index file.

Further, the retrieval cycle in Step S105 may be set by the user, and may also be per hour, per day, per week and per month.

Further, the index file formed by the increment index in Step S106 may be temporarily saved in the memory, to reduce the workload and time of CPU reading and processing.

Further, the merge operation in Step S107 is performed when the mobile phone is idle.

Further, the originally occupied memory space is released after the index file is merged.

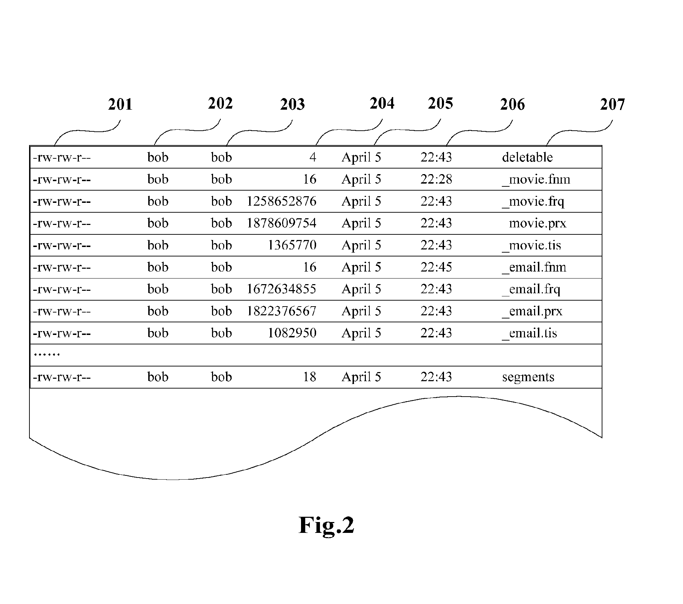

Fig. 2 is a schematic diagram of an index file directory structure in a preferred embodiment of the present invention:

> 201: read-write permission of index files
> 202: creator of index files
> 203: last modifier of index files
> 204: size of index files, unit: byte
> 205: last modification date of index files
> 206: last modification time of index files
> 207: name of index files

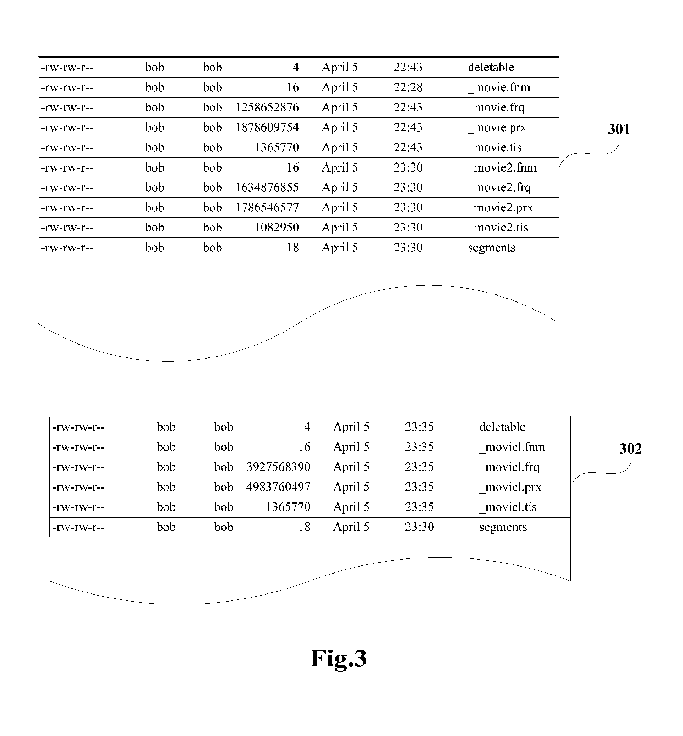

An index is comprised of one or more segments. Each segment is comprised of multiple index files. Index files belonging to one same segment have the identical prefix name and the different suffix name. In Fig. 3, the index file directory is comprised of two segments: _movie and _email, respectively.

Fig. 3 is a schematic diagram of the increment index in a preferred embodiment of the present invention, as shown in Fig. 3:

301 is the schematic diagram of an index directory containing two segments: _movie and _movie2, respectively. When the index merge cycle arrives, segments in the identical category may be merged to reduce index files, in order to reduce the number of times of IO and improve the search performance.

302 is an index directory structure after _movie and movie2 are merged. It can be seen that the master index file type is kept unchanged. However, the size of each file has been increased, and the original small index file will be deleted after the index file is completely merged.

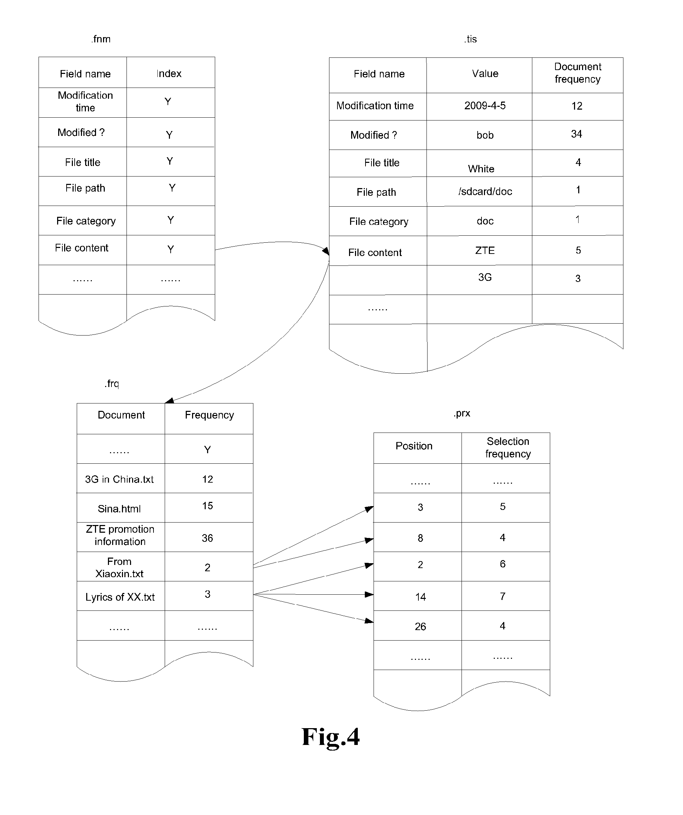

Fig. 4 is a schematic diagram of an index file structure according to a preferred embodiment of the present invention. In the embodiment, the contents in four index files are customized to some extent, especially considering the local search features and the special search results of embedded equipment.

In the embodiment, the index information is saved by adopting four sub-index files; such granular partition is beneficial to the maximization of performance and the minimization of resource utilization. For example, if a certain field is not indexed, the whole field may be completely removed quickly from the query based on the index marker in the .fnm file by operations. But, if the item itself does not appear, it is unnecessary to find the position information.

In the above step, all field names contained in relevant documents in the segments are saved in the .fnm file, wherein each field is marked to reflect whether the field is indexed. The field used in the present embodiment comprises: modification time, modified or not, file title, file path, file category and file contents or other information.

All items (meta-information set is comprised of field name and values) in the segments, namely, segmented entries, are saved in the .tis file. Each item entry contains its document frequency (Doc freq.), namely, how many documents the entry corresponding to the value appears in. Herein, take value="ZTE" as example, it is indicated that "ZTE" appears in five documents.

The frequency of each item in a document is saved in .frq file. Herein, take "ZTE" in the .tis file as example, in conjunction with the .frq file, it is indicated that "ZTE" respectively appears in the following five files: "3G in China.txt", "Sina.html", "ZTE promotion information", "From Xiaoxin.txt" and "Lyrics of XX.txt", wherein "ZTE" appears twelve times in "3G in China.txt", fifteen times in "Sina.html", and so on. Corresponding to the file "3G in China.txt", the number of times that it is selected by the user historically is five, while in the file "Sina.html", the number of times that it is selected by the user historically is 100.

The position of each item in the document is listed in the .prx file, and the number of times that the search results are selected by the user is shown in the search result list. Herein, take "ZTE" as example, it is indicated that "ZTE" is in "From Xiaoxin.txt" and located the third and eighth positions in a word segmentation list segmented by binary segmentation.

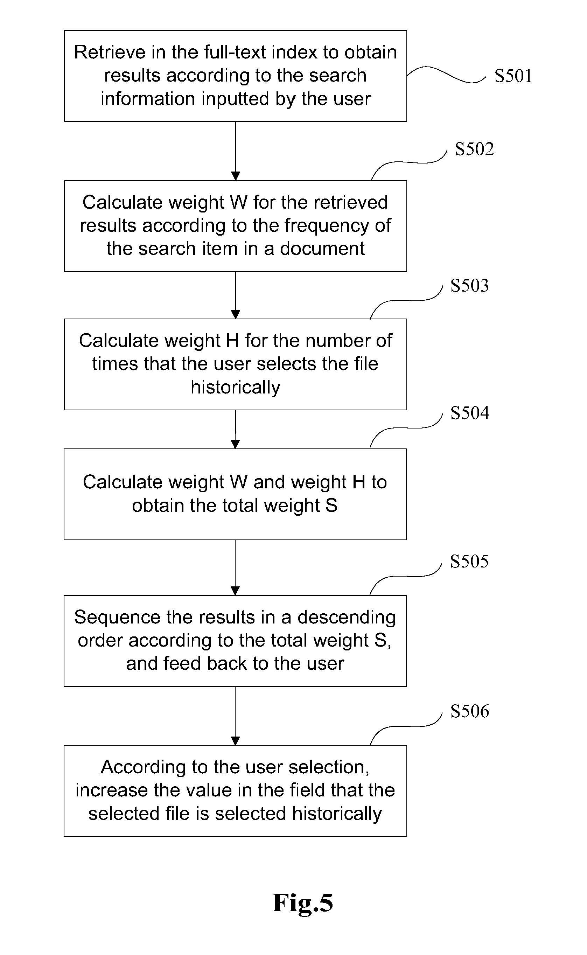

Fig. 5 is the flowchart of sequencing search results according to the present invention. As shown in Fig. 5, the following steps are specifically comprised.

Step S501, according to information inputted by the user, retrieval is performed in the full-text index to obtain a retrieval result set.

Step S502, weight is calculated for retrieved results according to the frequency of the search item in a file. Assumed that the number of times that the search item appears in the file n is $W_n$ and the total number of times that the search item appears is $W_F$. In the present invention, taking search item="ZTE" as example, when File 1 is "3G in China.txt", File 2 is "Sina.html", File 3"ZTE promotion information.wmv", File 4 is "From Xiaoxin.txt", and File 5 is "Lyrics of XX.txt", the corresponding $W_n$ is: $W_1=12$, $W_2=15$, $W_3=36$, $W_4=2$, $W_5=3$, respectively.

$$W_F = \sum_1^n W_n = W_1 + W_2 + W_3 + W_4 + W_5 = 68$$

So, the weight corresponding to each file is: $W_{nf}=W_n/W_F$. In the embodiment of the present invention, $W_{1f}$=12/68. $W_{2f}$=15/68, $W_{3f}$=36/68, and so on. The preliminary sequence obtained is: $W_{3f}$>$W_{2f}$>$W_{1f}$>$W_{5f}$>$W_{4f}$.

Step S503, weight is calculated according to the number of times that the user selects the file historically. Assumed that the number of times that the user selects a certain file n historically is $H_n$ and the total number of times that the user selects a search item historically is $H_F$. In the embodiment of the present invention, taking search item="ZTE" as example, $H_n$ corresponding to the file is: $H_1$=5, $H_2$=100, $H_3$=6, $H_4$=7, $H_5$=4, respec-

tively. $H_F = \sum_{1}^{n} H_n = H_1 + H_2 + H_3 + H_4 + H_5 = 122$ So, the weight for each file selected historically is: $H_{nf}$=$H_n$/$H_F$. In the embodiment of the present invention, $H_{n1}$=5/122, $H_{n2}$=100/122, $H_{n3}$=6/122, and so on. Hereby the obtained sequence is: $H_{2f}$>$H_{4f}$>$H_{3f}$>$H_{1f}$>$H_{5f}$.

Step S504, the total weight $S_n$ of the file is calculated according to the weight $W_n$ obtained in accordance with the frequency of the search item in the file and the weight $H_n$ of the number of times that the file is selected by the user historically. The calculation formula is: $S_n$=$W_n$+$H_{nf}$. $S_n$ obtained according to the formula is: $S_1$=0.217, $S_2$=1.041, $S_3$=0.578, $S_4$=0.086, $S_5$=0.077, respectively, and the sequence in a descending order is: $S_2$>$S_3$>$S_1$>$S_4$>$S_5$.

Step S505, the search results are fed back by the way of the list to the user according to the descending order of $S_n$. In the embodiment of the present invention, the order is in turn as: "Sina.html", "ZTE promotion information.wmv", "3G in China.txt", "From Xiaoxin.txt", and "Lyrics of XX.txt".

Step S506, according to the user selection, the value of the selected file in the Select Frequency field in the .frq form is increased by 1.

From the above analysis, it can be seen that the last sequence result is different from both the result of sequencing independently according to the frequency of the search item in the file and the result of sequencing according to the number of times that the user selects the file historically. It can be seen from the sequence result that, although the frequency of the search item in the file "ZTE promotion information.wmv" is very high, as the number of times that the user views the file "Sina.html" is more than the frequency of the search item in the file "ZTE promotion information.wmv", it can be supposed that the user wants to lookup the most interested and favorite files and contents in the past by searching "ZTE", namely, "Sina.html" rather than "ZTE promotion information.wmv".

By the present invention, the mobile phone local index table can be automatically updated in real time, in order to meet the occasional local search demands, and fewer mobile phone resources and power sources are occupied. The user experience of the mobile terminal is improved.

In addition, for the processing way of search results, apart from the relevance degree algorithm in general situations, namely, the factor of the frequency that the search item appears in a file, the use habit of the mobile terminal user is also taken into consideration, and the number of times that the user selects a certain file historically is also taken into consideration and is used as one of factors to be considered for the relevance. As a result, the search results are closer to the demands of the user.

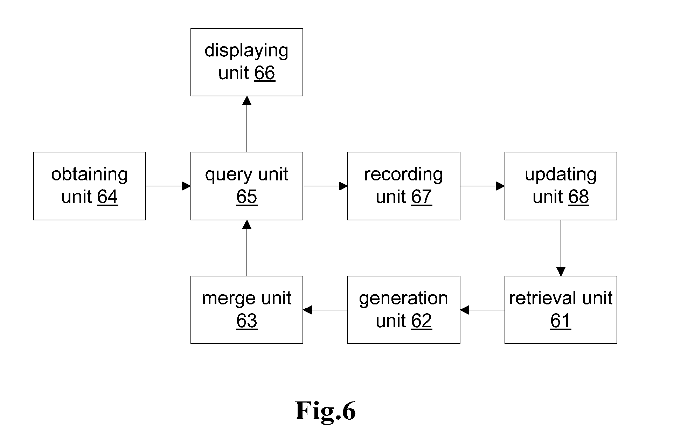

The present invention also provides an apparatus for updating an index and sequencing search results based on the updated index in a terminal. Fig. 6 is a structure block diagram of an apparatus according to the present invention. As shown in Fig. 6, the apparatus comprises: a retrieval unit 61, configured to retrieve whether there is any modification in a file in the terminal; a generation unit 62, configured to perform an increment index for the modified file to generate a new index file if there is any modification in the file, wherein the increment index includes the number of times that the modified file is selected historically; a merge unit 63, configured to merge the new index file into the original index file; an obtaining unit 64, configured to obtain key words input by the user; an query unit 65, configured to query the search results related to the key words, sequence the search results according to the relevance between the search results and the key words and the number of times that the modified file is selected historically; a displaying unit 66, configured to display the sequenced search results to the user; a recording unit 67, configured to record the number of times that the user selects the modified file; an updating unit 68, configured to update the number of times that the modified file is selected historically.

The apparatus further comprises: a comparison unit, configured to compare the time stamp of the existing file with the time stamp of the file reserved when the index is created at the last time; if the time stamp of the existing file is identical to the time stamp of the file reserved when the index is created at the last time, determine that there is no modification in the file; if the time stamp of the existing file is not identical to the time stamp of the file reserved when the index is created at the last time, determine that there is modification in the file.

The retrieval unit retrieves whether there is any modification in the file with a predetermined retrieval cycle.

The merge unit merges the new index file into the original index file regularly or when detecting that the mobile phone is idle or when the new index files reach a predetermined quantity.

Those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope defined in claims shall comprise cover any modification, equivalent substitution and improvement within the spirit and principle of the present invention.

**Claims**

1.   A method for updating an index and sequencing search results based on the updated index in a terminal, **characterized by** comprising:

   retrieving whether there is any modification in a file in the terminal;
   if there is any modification in the file, performing an increment index for the modified file to generate a new index file, wherein the increment index includes a number of times that the modified file is selected historically;
   merging the new index file into the original index file;
   obtaining key words input by the user;
   querying the search results related to the key words, sequencing the search results according to the relevance between the search results and the key words and the number of times that the modified file is selected historically, and displaying the sequenced search results to the user.

2.   The method according to claim 1, **characterized in that** after sequencing the search results according to the relevance between the search results and the key words and the number of times that the modified file is selected historically, and displaying the sequenced search results to the user, the method further comprises:

   recording a number of times that the user selects the modified file, and updating the number of times that the modified file is selected historically.

3.   The method according to claim 1, **characterized in that** the step of retrieving whether there is any modification in a file in the terminal comprises:

comparing a time stamp of an existing file with a time stamp of the file reserved when the index is created at the last time;
if the time stamp of the existing file is identical to the time stamp of the file reserved when the index is created at the last time, determining that there is no modification in the file;
if the time stamp of the existing file is not identical to the time stamp of the files reserved when the index is created at the last time, determining that there is modification in the file.

4.   The method according to claim 1, **characterized in that** the step of retrieving whether there is any modification in a file in the terminal comprises: retrieving whether there is any modification in the file in the terminal with a predetermined retrieval cycle.

5.   The method according to claim 1, **characterized in that** the new index file is regularly merged into the original index file when retrieving that the terminal is idle or when the new index file reaches a predetermined quantity.

6.   The method according to claim 5, **characterized in that** the cycle for merging is identical to the cycle which is set by the user to retrieve whether there is any modification in a file in the terminal.

7.   The method according to claim 1, **characterized in that** after the new index file is generated, the new index file temporarily saves in a memory of the terminal, and the temporarily saved new index file is released after the new index file is merged into the original index file.

8.   An apparatus for updating an index and sequencing search results based on the updated index in a terminal, **characterized by** comprising:

   a retrieval unit, configured to retrieve whether there is any modification in a file in the terminal;
   a generation unit, configured to perform an increment index for the modified file to generate a new index file if there is any modification in the file, wherein the increment index includes a number of times that the modified file is selected historically;
   a merge unit, configured to merge the new index file into the original index file;
   an obtaining unit, configured to obtain key words input by the user;
   an query unit, configured to query the search results related to the key words, sequence the search results according to the relevance between the search results and the key words and the number of times that the modified file is selected historically;

a displaying unit, configured to display the sequenced search results to the user.

9. The apparatus according to claim 8, **characterized by** further comprising:

a recording unit, configured to record a number of times that the user selects the modified file;
an updating unit, configured to update the number of times that the modified file is selected historically.

10. The apparatus according to claim 9, **characterized by** further comprising:

a comparison unit, configured to compare a time stamp of an existing file with a time stamp of the file reserved when the index is created at the last time;
a first determining unit, configured to determine that there is no modification in the file if the time stamp of the existing file is identical to the time stamp of the file reserved when the index is created at the last time;
a second determining unit, configured to determine that there is modification in the file if the time stamp of the existing file is not identical to the time stamp of the file reserved when the index is created at the last time.

Accept the input from the user, and determine the range of files to be indexed — S101

Create file meta-information, including time stamp and file type or the like — S102

Analyze the text information of files, including file name and text information in files, and the text annotation of multimedia files or the like — S103

Create a full-text index — S104

Retrieve regularly to check whether there is any modification in a file — S105

Is there any modification in the file? — No

Yes

an increment index is performed for the new file — S106

Merge the index file containing increment information into the original large index file — S107

**Fig.1**

| 201 | 202 | 203 | 204 | 205 | 206 | 207 |
|---|---|---|---|---|---|---|
| -rw-rw-r-- | bob | bob | 4 | April 5 | 22:43 | deletable |
| -rw-rw-r-- | bob | bob | 16 | April 5 | 22:28 | _movie.fnm |
| -rw-rw-r-- | bob | bob | 1258652876 | April 5 | 22:43 | _movie.frq |
| -rw-rw-r-- | bob | bob | 1878609754 | April 5 | 22:43 | _movie.prx |
| -rw-rw-r-- | bob | bob | 1365770 | April 5 | 22:43 | _movie.tis |
| -rw-rw-r-- | bob | bob | 16 | April 5 | 22:45 | _email.fnm |
| -rw-rw-r-- | bob | bob | 1672634855 | April 5 | 22:43 | _email.frq |
| -rw-rw-r-- | bob | bob | 1822376567 | April 5 | 22:43 | _email.prx |
| -rw-rw-r-- | bob | bob | 1082950 | April 5 | 22:43 | _email.tis |
| ...... | | | | | | |
| -rw-rw-r-- | bob | bob | 18 | April 5 | 22:43 | segments |

**Fig.2**

| | | | | | | | |
|---|---|---|---|---|---|---|---|
| -rw-rw-r-- | bob | bob | 4 | April 5 | 22:43 | deletable | |
| -rw-rw-r-- | bob | bob | 16 | April 5 | 22:28 | _movie.fnm | |
| -rw-rw-r-- | bob | bob | 1258652876 | April 5 | 22:43 | _movie.frq | |
| -rw-rw-r-- | bob | bob | 1878609754 | April 5 | 22:43 | _movie.prx | 301 |
| -rw-rw-r-- | bob | bob | 1365770 | April 5 | 22:43 | _movie.tis | |
| -rw-rw-r-- | bob | bob | 16 | April 5 | 23:30 | _movie2.fnm | |
| -rw-rw-r-- | bob | bob | 1634876855 | April 5 | 23:30 | _movie2.frq | |
| -rw-rw-r-- | bob | bob | 1786546577 | April 5 | 23:30 | _movie2.prx | |
| -rw-rw-r-- | bob | bob | 1082950 | April 5 | 23:30 | _movie2.tis | |
| -rw-rw-r-- | bob | bob | 18 | April 5 | 23:30 | segments | |

| | | | | | | | |
|---|---|---|---|---|---|---|---|
| -rw-rw-r-- | bob | bob | 4 | April 5 | 23:35 | deletable | |
| -rw-rw-r-- | bob | bob | 16 | April 5 | 23:35 | _movie1.fnm | 302 |
| -rw-rw-r-- | bob | bob | 3927568390 | April 5 | 23:35 | _movie1.frq | |
| -rw-rw-r-- | bob | bob | 4983760497 | April 5 | 23:35 | _movie1.prx | |
| -rw-rw-r-- | bob | bob | 1365770 | April 5 | 23:35 | _movie1.tis | |
| -rw-rw-r-- | bob | bob | 18 | April 5 | 23:30 | segments | |

# Fig.3

.fnm

| Field name | Index |
|---|---|
| Modification time | Y |
| Modified ? | Y |
| File title | Y |
| File path | Y |
| File category | Y |
| File content | Y |
| ...... | ...... |
| | |

.tis

| Field name | Value | Document frequency |
|---|---|---|
| Modification time | 2009-4-5 | 12 |
| Modified ? | bob | 34 |
| File title | White | 4 |
| File path | /sdcard/doc | 1 |
| File category | doc | 1 |
| File content | ZTE | 5 |
| | 3G | 3 |
| ...... | | |
| | | |

.frq

| Document | Frequency |
|---|---|
| ...... | Y |
| 3G in China.txt | 12 |
| Sina.html | 15 |
| ZTE promotion information | 36 |
| From Xiaoxin.txt | 2 |
| Lyrics of XX.txt | 3 |
| ...... | ...... |
| | |

.prx

| Position | Selection frequency |
|---|---|
| ...... | ...... |
| 3 | 5 |
| 8 | 4 |
| 2 | 6 |
| 14 | 7 |
| 26 | 4 |
| ...... | ...... |
| | |

**Fig.4**

```
┌─────────────────────────────────┐
│ Retrieve in the full-text index │          S501
│ to obtain results according to  │
│ the search information inputted  │
│ by the user                     │
└─────────────────────────────────┘
              │
              │                              S502
              ▼
┌─────────────────────────────────┐
│ Calculate weight W for the      │
│ retrieved results according to  │
│ the frequency of the search item│
│ in a document                   │
└─────────────────────────────────┘
              │
              │                              S503
              ▼
┌─────────────────────────────────┐
│ Calculate weight H for the      │
│ number of times that the user   │
│ selects the file historically   │
└─────────────────────────────────┘
              │
              │                              S504
              ▼
┌─────────────────────────────────┐
│ Calculate weight W and weight H │
│ to obtain the total weight S    │
└─────────────────────────────────┘
              │
              │                              S505
              ▼
┌─────────────────────────────────┐
│ Sequence the results in a       │
│ descending order according to   │
│ the total weight S, and feed    │
│ back to the user                │
└─────────────────────────────────┘
              │
              │                              S506
              ▼
┌─────────────────────────────────┐
│ According to the user selection,│
│ increase the value in the field │
│ that the selected file is       │
│ selected historically           │
└─────────────────────────────────┘
```

**Fig.5**

Fig.6

## INTERNATIONAL SEARCH REPORT

| International application No. |
|---|
| PCT/CN2010/074326 |

**A. CLASSIFICATION OF SUBJECT MATTER**

Refer to the extra sheet

According to International Patent Classification (IPC) or to both national classification and IPC

**B. FIELDS SEARCHED**

Minimum documentation searched (classification system followed by classification symbols)

IPC:G06F17/-;H04Q7/-;H04M1/-;H04W72/-

Documentation searched other than minimum documentation to the extent that such documents are included in the fields searched

Electronic data base consulted during the international search (name of data base and, where practicable, search terms used)

WPI;EPODOC;CNPAT;CNKI;GOOGLE AND KEY WORDS: SEARCH, INQUIRE, SEQUENCE, UPDATE, MODIFY, COMBINE, ADD,RELEVANCE, TIME, FREQUENCY, TERMINAL ,MOBILE ,PDA, DESKTOP, INDEX

**C. DOCUMENTS CONSIDERED TO BE RELEVANT**

| Category* | Citation of document, with indication, where appropriate, of the relevant passages | Relevant to claim No. |
|---|---|---|
| A | CN 1924854 A (ZHEJIANG UNIVERSITY) 07 March 2007 (07.03.2007) Page 3 Line 12- Page 5 Line 12 in the description, Figures 1,2 | 1-10 |
| A | CN 101046804 A (INTERNATIONAL BUSINESS MACHINES CORPORATION) 03 October 2007(03.10.2007) the whole document | 1-10 |
| A | CN 101150802 A(BEIJING SAMSUNG COMMUNICATION TECHNOLOGY RESEARCH CO., LTD.) 26 March 2008(26.03.2008) the whole document | 1-10 |
| A | US 2007/0016566 A1(ASUSTEK COMPUTER INC.) 18 January 2007(18.01.2007) the whole document | 1-10 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| **09 September 2010(09.09.2010)** | **08 Oct. 2010 (08.10.2010)** |

| Name and mailing address of the ISA/CN<br>The State Intellectual Property Office, the P.R.China<br>6 Xitucheng Rd., Jimen Bridge, Haidian District, Beijing, China 100088<br>Facsimile No. 86-10-62019451 | Authorized officer<br><br>GUO,Fengshun<br>Telephone No. (86-10)82245182 |
|---|---|

Form PCT/ISA /210 (second sheet) (July 2009)

<table>
<tr><td colspan="2"><b>INTERNATIONAL SEARCH REPORT</b><br>Information on patent family members</td><td colspan="2">International application No.<br><br><i>PCT/CN2010/074326</i></td></tr>
</table>

| Patent Documents referred in the Report | Publication Date | Patent Family | Publication Date |
|---|---|---|---|
| CN 1924854 A | 07.03.2007 | NONE | |
| CN 101046804 A | 03.10.2007 | US 2007276807 A1 | 29.11.2007 |
| | | JP 2007272888 A | 18.10.2007 |
| | | KR 20070098505 A | 05.10.2007 |
| | | CN 100495398 C | 03.06.2009 |
| | | US 7644069 B2 | 05.01.2010 |
| CN 101150802 A | 26.03.2008 | NONE | |
| US 2007/0016566 A1 | 18.01.2007 | TW 273450 B | 11.02.2007 |
| | | TW 200703044 A | 16.01.2007 |

Form PCT/ISA /210 (patent family annex) (July 2009)

# INTERNATIONAL SEARCH REPORT

| International application No. |
|---|
| PCT/CN2010/074326 |

Continuation of: the second sheet

**A.   CLASSIFICATION OF SUBJECT MATTER**

  G06F 17/30 (2006.01) i

  H04M 1/725 (2006.01) i

According to International Patent Classification (IPC) or to both national classification and IPC

Form PCT/ISA /210 (extra sheet) (July 2009)